Europäisches Patentamt

(19) European Patent Office

Office européen des brevets

(11) Publication number: **0 081 921**
A1

(12) **EUROPEAN PATENT APPLICATION**

(21) Application number: **82306165.0**

(22) Date of filing: **19.11.82**

(51) Int. Cl.³: **G 07 F 7/08,** G 07 F 7/00

(30) Priority: **10.12.81 GB 8137197**

(71) Applicant: **Hawker Siddeley Revenue Controls Limited,
177 Nutfield Road, Merstham Surrey, RH1 3HH (GB)**

(43) Date of publication of application: **22.06.83**
**Bulletin 83/25**

(72) Inventor: **Easterby, Robert William, 66, Springcroft
Hartley, Dartford Kent (GB)**

(84) Designated Contracting States: **AT BE CH DE FR IT LI
LU NL SE**

(74) Representative: **Bird, Vivian John et al, PAGE & CO.
Temple Gate House, Temple Gate Bristol, BS1 6PL (GB)**

(54) **Credit card systems.**

㊗ A highly-secure dispensing system, particularly for public utility products such as electricity, gas or district heating, requiring identifying information on both a «master» card and a «value» card to be found compatible before a quantity of the commodity can be dispensed which is commensurate with a value on the «value» card.

## Credit Card Systems

This invention relates to commodity-dispensing systems and more particularly, although not exclusively, to such systems for dispensing a predetermined quantity of a public utility such as electricity, gas, water or district heating.

Fraud of commodity-dispensing systems and particularly those of public utilities, is by no means uncommon as do also the public utilities suffer a high level of "bad debts". The present invention seeks to obviate these problems by providing a "credit-card" type of system which can be made highly secure and obviate the need for cash-meters.

The present invention provides a commodity-dispensing system having token-reading means and commodity-dispensing means, characterised in that the system includes a "master" token carrying information, a "value" token carrying both identifying information and value information, the token-reading means has reading means by which the identifying information carried by the "master" token can be read, reading means by which the identifying information carried by the "value" token can be read, and comparator means by which the identifying information read from the "value" token can be compared with that read from the "master" token, and the commodity-dispensing means is operable only upon the comparator means finding the compared information to be compatible to dispense a quantity of the commodity compatible with the value information carried by the "value" token.

The two tokens may each be in the form of cards with the information carried thereby being in a form in which it can be read magnetically.

The reading means by which the identifying information carried by the "master" token can be read may be one and the same as the reading means by which the identifying information carried by the "value" token can be read and, in this case, storage means may be provided between the reading means and the comparator means such that the identifying information read from the "master" token can be stored after removal of the "master" token from the reading means so that such information is retained to be subsequently compared in the comparator means when the reading means later reads the identifying information carried by the "value" token.

In the alternative, the reading means by which the identifying information carried by the "master" token is read may be separate from the reading means by which the identifying information carried by the "value" token is read, the two tokens then needing both being in position to be read by its respective reading means at the same time.

The "value" token may carry information indicative of a series of sub-values, the system then being such that upon insertion of the "value" token into the reading means and the comparator means finding the compared identifying information compatible, the dispensing means is rendered operable thereby to dispense a quantity of the commodity compatible with one of the series of sub-values, cancellation means then being provided in the system to cancel said one of the series of sub-values alternatively, the system may have a capturing means by which, upon the dispensing means being rendered operable, the "value" token is captured and held against further re-use by the capturing means.

One embodiment of the present invention will now be described in greater detail, by way of example only.

The credit card system here below described is for the purpose of controlling the metering of the flow of hot water within a domestic property connected to a district heating system.

Affixed to the meter in the domestic property is a token-reader and commodity-dispensing equipment which controls the meter to dispense a quantity of hot water compatible with a value read by the equipment. The equipment is designed to accept both a "master" magnetically encoded card and a "value" magnetically encoded card.

The customer is issued with the "master" card which carries thereon identifying information.

Issue points are provided by the district-heating authority at which are located encoders. Upon the customer inserting into the encoder both his "master" card and a sum of money, the encoder would issue an appropriate number of value cards each having a unit value. On each of these "value" cards there would be encoded the identifying information carried by the customer's "master" card.

The customer then obtains an amount of hot water compatible with the value of the "value" card by inserting his "master" card into the "master" card reading means and the "value" card into the "value" card reading means both provided in the card-reader and commodity-dispensing equipment affixed to his meter. The equipment includes comparator means by which the identifying information read from the "master" card by the "master" card reading means and the identifying information on the "value" card read by the "value" card reading means is compared. If these two sets of identifying information are found by the comparator to be compatible, dispensing means within the equipment allow the meter to dispense a quantity of hot water compatible with the value of the value card.

Capturing means within the equipment then captures and retains the "value" card to prevent its further re-use.

The customer may then, or at a later time, insert a further "value" card which allows a further quantity of hot water compatible with the value of the "value" card to be delivered.

The equipment may include erasure means by which, when the "value" card has been captured by the equipment, the value magnetically encoded on the "value" card is automatically erased.

The system above described is highly secure in that the "value" cards are of no use unless accompanied by the "master" card the identifying information on which has been copied onto the "value" card. Thus, if the "value" card is stolen it is of no use unless the corresponding "master" card has also been stolen with it.

The security of the system can further be enhanced by the encoder at the issue point recording how many "value" cards have been purchased for each "master" card.

Particularly if the erasure facility is provided, the system's security is further enhanced by the "value" cards having their magnetically-encoded value erased upon use of the card to obtain the facility of the compatible quantity of hot water.

Each customer may be allocated a pass code which the customer is required to key-in to the encoder at the issue point at the time of presentation of his "master" card to obtain the "value" cards. The encoder would then check the pass code keyed-in by the customer against a similar code magnetically encoded on the "master" card and "value" cards only being issued when these two pieces of information were consistent. This would further help to reduce fraud.

Whilst the above described embodiment has been described with reference to a district heating system, clearly the credit card system could equally well be used for dispensing other public utilities such as gas or electricity.

Indeed, the system could be used for dispensing products as well as public utility services.

In the above described embodiment, the equipment has been described as requiring the simultaneous positioning of the two cards in their respective reading means.  This may not necessarily be so.  Only but a single reader may be provided into which the "master" card and the "value" card are sequentially inserted. In this case, the identifying information on the "master" card would first be read and storage means would be provided in the equipment to "hold" this information until the identifying information on the "value" card had been read by the reading means and compared in the comparator with the held identifying information read from the "master" card.

7                    0081921

Claims:

1. A commodity-dispensing system having token-reading means and commodity-dispensing means, characterised in that the system includes a "master" token carrying information, a "value" token carrying both identifying information and value information, the token-reading means has reading means by which the identifying information carried by the "master" token can be read, reading means by which the identifying information carried by the "value" token can be read, and comparator means by which the identifying information read from the "value" token can be compared with that read from the "master" token, and the commodity-dispensing means is operable only upon the comparator means finding the compared information to be compatible to dispense a quantity of the commodity compatible with the value information carried by the "value" token.

2. A system as claimed in Claim 1, wherein the "master" token is in the form of a card with the information carried thereby being in a form which can be read magnetically.

3. A system as claimed in either Claim 1 or Claim 2, wherein the "value" token is in the form of a card with the information carried thereby being in a form which can be read magnetically.

4. A system as claimed in any one of the preceding
   Claims, wherein the reading means by which the
   identifying information carried by the "master"
   token can be read as the same as the reading means
   by which the identifying information carried by
   the "value" token can be read and storage means is
   provided between the reading means and the
   comparator means such that the identifying
   information read from the "master" token can be
   stored after removal of the "master" token from
   the reading means so that such information is
   retained subsequently to be compared in the
   comparator means when the reading means later
   reads the identifying information carried by the
   "value" token.

5. A system as claimed in any one of Claims 1 to 3,
   in which the reading means by which the
   identifying information carried by the "master"
   token is read as separate from the reading means
   by which the identifying information carried by
   the "value" token is read, the two tokens then
   needing to be both in position relative to the
   respective reading means to be read by its
   respective reading means at the same time.

6. A system as claimed in any one of the preceding
   Claims, wherein the "value" token carries
   information indicative of a series of sub-values,
   the system being such that upon insertion of the
   "value" token into the reading means and the
   comparator means finding the compared information
   comptible, the dispensing means is rendered

0081921

operable thereby to dispense a quantity of the
commodity compatible with one of the series of
sub-values, cancellation means also being provided
in the system to cancel said one of the series of
sub-values.

7. A system as claimed in any one of Claims 1-5,
   wherein the system further includes capturing
   means by which, upon the dispensing means being
   rendered operable, the "value" token is captured
   and held against further re-use by the capturing
   means.

8. A system as claimed in any one of the preceding
   Claims, wherein the commodity is that of a public
   utility.

**European Patent Office**

**EUROPEAN SEARCH REPORT**

Application number

EP 82 30 6165

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 675 816 (E.R.BOURKE)<br><br>*Abstract; column 1, line 68 - column 2, line 46; column 2, line 65 - column 3, line 27; column 4, line 31 - column 6, line 75; figure 5*<br><br>--- | 1,2,5,7 | G 07 F 7/08<br>G 07 F 7/00 |
| X | US-A-3 570 643 (H.F.MAIERHOFER)<br><br>*Abstract; column 1, line 31 - column 3, line 20; column 5, line 1 - column 6, line 53; figures*<br><br>--- | 1-3,5,7 | |
| A | FR-A-2 168 552 (G.A.O.)<br><br>*Claims and figures*<br><br>--- | 1,2,5,7 | |
| A | FR-A-2 133 941 (OSTERTAG-WERKE)<br><br>*Claims and figures*<br><br>--- | 1,2,5,7 | TECHNICAL FIELDS SEARCHED (Int. Cl. ³)<br><br>G 07 F 7/00<br>G 07 F 7/02<br>G 07 F 7/08 |
| A | DE-A-1 499 562 (TELEFUNKEN)<br><br>*Claims and figure*<br><br>----- | 1,2,5,7 | G 07 F 7/10<br>G 07 C 9/00 |

The present search report has been drawn up for all claims

| Place of search THE HAGUE | Date of completion of the search 18-03-1983 | Examiner DAVID J.Y.H. |
|---|---|---|

EPO Form 1503. 03.82